# EUROPÄISCHE PATENTSCHRIFT

(11) **EP 1 641 303 B1**
(45) Veröffentlichungstag und Bekanntmachung des Hinweises auf die Patenterteilung: **10.10.2007**
(21) Anmeldenummer: 04023027.8
(22) Anmeldetag: 28.09.2004
(51) Int. Cl.: H04Q 7/38, H04L 29/06

(54) **Nutzung von Presence-Informationen (Statusinformationen) zur Erweiterung einer bestehenden Kommunikationsverbindung**
Use of presence information (status information) for expanding an existing communication connection
Utilisation d'informations de présence (informations de l'état) pour élargir une connexion de communications existante

(43) Veröffentlichungstag der Anmeldung: 29.03.2006
(73) Patentinhaber: NOKIA SIEMENS NETWORKS GMBH & CO. KG, 81541 München (DE)
(72) Erfinder: Milinaki, Alexander, 81371 München (DE)

(56) Entgegenhaltungen:
- WO-A-01/86509
- WO-A-20/04071048
- DE-A1- 19 754 640
- "Universal Mobile Telecommunications System (UMTS); Presence service; Stage 1 (3GPP TS 22.141 version 5.2.0 Release 5); ETSI TS 122 141" ETSI STANDARDS, EUROPEAN TELECOMMUNICATIONS STANDARDS INSTITUTE, SOPHIA-ANTIPO, FR, Bd. 3-SA1, Nr. V520, März 2002 (2002-03), XP014007341 ISSN: 0000-0001

## Beschreibung

Die Erfindung betrifft Verfahren und Vorrichtungen zum Senden von mindestens ein Endgerät betreffenden Statusinformationen an ein weiteres Endgerät mittels eines Telekommunikationsnetzes.

Telekommunikationsnetze wie insbesondere zellulare Mobilfunknetze sind dem Fachmann bekannt, beispielsweise für GSM-Mobilfunknetze und für 3G-Mobilfunknetze aus in www.3GPP.com und aus www.etsi.org veröffentlichten Beschreibungen von 3G-Mobilfunknetzen.

Eine Hauptanwendung mobiler Telekommunikation ist mobile Sprachkommunikation. Grundsätzlich steht mobilen Endgeräten jedoch auch eine Vielzahl anderer Anwendungen (Bildübertragung, Bildkonferenzen, Buddie-Listen etc.) zur Verfügung, jedoch sind eine Vielzahl von Mobilfunkendgeräten unterschiedlicher Bauart und unterschiedlichen Alters in Verwendung, welche unterschiedliche Formen der Kommunikation unterstützen bzw. nicht unterstützen. Deshalb findet derzeit im wesentlichen Sprachkommunikation und SMS-Kommunikation Verwendung.

Die WO 01/86509 A1 beschreibt ein Verfahren zum Übertragen von Informationen über die Fähigkeiten eines Endgerätes an weitere Endgeräte. Darüber hinaus offenbart die WO 2004/071048 A1 das Übertragen einer Statusliste von einem Endgerät mit Informationen darüber, welche Übertragungsarten mit anderen Endgeräten möglich sind.

Aufgabe der vorliegenden Erfindung ist es, möglichst einfach, effizient und universell neben Sprachkommunikation weitere Kommunikationsformen für Teilnehmer/Endgeräte von Telekommunikationsnetzen zu eröffnen. Die Aufgabe wird jeweils durch die Gegenstände der unabhängigen Ansprüche gelöst.

Indem nach dem Aufbau einer Verbindung (insbesondere einer Sprachverbindung) ein oder beide Endgeräte die Übersendung von Statusinformationen (betreffend beispielsweise Eigenschaften und/oder voreingestellte Präferenzen eines Endgerätes) betreffend ein Endgerät an das jeweils andere Endgerät veranlassen, steht unmittelbar nach Aufbau einer Verbindung beiden Endgeräten eine Information darüber zur Verfügung, welche Kommunikationsformen aufgrund der übertragenen Statusinformationen das jeweils andere Endgerät unterstützt und/oder (gemäß erfassten, gespeicherten Eingaben eines Nutzers) bevorzugt. Damit könnte beispielsweise nur dann zusätzlich zu einer ausgebauten Sprachverbindung eine Bildverbindung aufgebaut werden, wenn diese von beiden Endgeräten gemäß den zueinander übertragenen Statusinformationen unterstützt und/oder gewünscht wird. Insbesondere wird ein Aufbau einer weiteren Verbindung zusätzlich zur bereits aufgebauten (Sprach- etc.)Verbindung von einem Endgerät dem weiteren Endgerät der Verbindung nur angeboten, falls dies von beiden Endgeräten gemäß den Statusinformationen unterstützt und/oder bevorzugt wird. Hierfür werden zweckmäßig Statusinformationen von einem Server in einem Telekommunikationsnetz (Mobilfunknetz etc.) auf Veranlassung des einen Endgerätes einer Verbindung dem anderen an der Verbindung beteiligten Endgerät übermittelt, nachdem das erste Endgerät dem (presence- etc.) Server eine Mitteilung geschickt hat, die dem Server erlaubt, automatisch oder nach Anfrage des weiteren Endgerätes dem weiteren Endgerät Statusinformationen (oder nur bestimmte Statusinformationen) zu übermitteln. Vorteilhaft ist also eine (halb-)automatische Änderung von Nutzungsrechten an in (Presence-) Servern (Rechnern) eines Telekommunikationsnetzes gespeicherten Statusinformationen für ein weiteres Endgerät durch ein ersteres Endgerät, das an der gleichen Verbindung beteiligt ist wie das weitere Endgerät.

Derartige Presence-Services in Mobilfunknetz erlauben es (einem Endgerät), Statusinformationen über einen anderen Benutzer herauszufinden oder ihre eigenen Statusinformationen zugängig zu machen und können beispielsweise gemäß 3GPP-TS 22.141/TS 23.141/TS 24.141 aufgebaut sein.

Weitere Merkmale und Vorteile der Erfindung ergeben sich aus den Patentansprüchen und der nachfolgenden Beschreibung eines Ausführungsbeispiels anhand einer Zeichnung. Dabei zeigt:

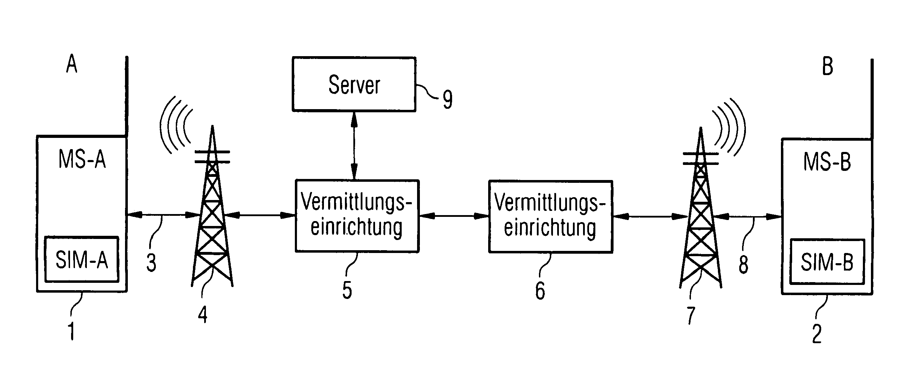

Figur 1 schematisch ein Telekommunikationsnetz.

Figur 1 zeigt ein erstes Endgerät (A oder) 1, das zu einem zweiten Endgerät (B oder) 2 über ein Telekommunikationsnetz eine Verbindung (z.B. Sprachverbindung) aufbaut. Im vorliegenden Beispiel ist das Telekommunikationsnetz ein zellulares Mobilfunknetz und die Verbindung vom Endgerät A zum Endgerät B verläuft über eine Luftschnittstelle 3, ein Basisstationssystem 4, eine Vermittlungseinrichtung (MSC/SGSN/GGSN/Media Gateway etc.) 5, eine weitere Vermittlungseinrichtung 6, ein weiteres Basisstationssystem 7 und eine weitere Luftschnittstelle 8. Im Mobilfunknetz besteht ein Zugriff (von beispielsweise 5 oder 6) auf in einen Presence-Service-Server (Statusinformationen für Endgeräte/Nutzer speichernde Einrichtung) 9, so dass vom Mobilfunknetz und/oder einem oder beiden der Endgeräte prinzipiell Statusinformationen abgefragt oder diesen gesendet werden können, soweit hierfür (erforderlichenfalls) Nutzungsrechte vorliegen.

Nach Etablierung (Verbindungsaufbau) einer Kommunikationsverbindung zwischen Endgeräten A und B (zum Beispiel einem Telefongespräch) wird von einem oder beiden der Endgeräte veranlasst, dass mit einem beispielsweise bereits vorhandenen Presence-Service 9 wechselseitig Statusinformationen betreffend die Endgeräte ausgetauscht werden. Die Statusinformationen können von einem Endgerät an das andere gesandt werden oder von einem Endgerät nach Genehmigung durch das jeweils weitere Endgerät von einem Presence-Service-Server 9 in einem Telekommunikationsnetz abgefragt werden. Der Austausch der Statusinformationen wird dabei durch die zuerst aufgebaute Verbindung (Sprachverbindung etc.) ausgelöst. Eine Zugriffsberechtigung eines Endgerätes A auf Statusinformationen (welche Statusinformationen ein weiteres Endgerät B betreffen) in einer Einrichtung 9 eines Telekommunikationsnetzes zu welchem das Endgerät A bereits eine Verbindung hat, kann für die Dauer der bereits aufgebauten Verbindung (insbesondere Sprachverbindung) begrenzt werden.

Beispielsweise hat das Endgerät A das Endgerät B angerufen (oder umgekehrt) und zwischen den beiden Endgeräten A und B ist eine Verbindung aufgebaut.

Das Endgerät A des Teilnehmers A, der hier beispielsweise die Kommunikation angestoßen hat (alternativ das andere Endgerät):
1.) bietet, abhängig von vordefinierten Einstellungen dem Nutzer des Endgerätes A an, seinem Kommunikationspartner (Endgerät B) für die Dauer der aufgebauten Verbindung (Gespräch) bestimmte oder alle Statusinformationen (betreffend das Endgerät; beispielsweise Übertragungsfähigkeit für Bildkommunikation) zur Verfügung zu stellen;
2.) ändert dann gegebenenfalls die Zugriffsrechte für das Endgerät B auf Statusinformation (Presence-Informationen) betreffend das Endgerät A in der Einrichtung 9, unter Verwendung der zur Etablierung der bereits aufgebauten Verbindung (Sprachverbindung etc.) verwendeten Adresse des Endgeräts (oder analog einer Karte im Endgerät) B;
3.) fragt die Statusinformationen (Presence-Informationen etc.) betreffend das Endgerät B in der Einrichtung 9 (Presence-Service-Server) ab, insbesondere wiederum unter Verwendung der zur Etablierung der bereits aufgebauten Verbindung verwendeten Adresse des Endgerätes B;
4.) informiert den Nutzer des Endgerätes A nach Erhalt (durch das Endgerät A) von Statusinformationen (Presence-Dokument etc.) betreffend das Endgerät B über weitere (über die bereits aufgebaute (Sprach-)Verbindung hinausgehende) Kommunikationsmöglichkeiten (z.B. Bildübertragung parallel zur aufgebauten Sprachverbindung etc.) mit dem Endgerät B (beispielsweise unter Berücksichtigung von Voreinstellungen und Möglichkeiten beider Endgeräte A und B);
5.) etabliert auf Verlangen des Nutzers des Endgerätes A weitere Kommunikationspfade (Verbindungen) zum Endgerät B, zum Beispiel unter Verwendung von Adressen (SIP-Adressen, IP-Adressen etc.), die mit den Statusinformationen (Presence-Information etc.) geliefert wurden; beispielsweise können also parallel zu einem gewöhnlichen Telefonat (Sprachverbindung), das mit einer Telefonnummer (MSISDN oder E.164-Nummer eines Endgerätes oder auch einer Mobilfunkteilnehmneridentitätskarte im Endgerät) aufgebaut wurde, eine "Chat"-Sitzung zur SIP-Adresse des gleichen Teilnehmers aufgebaut werden, ohne dass das Endgerät A vorher die SIP-Adresse des Endgerätes B kannte;
6.) widerruft nach Ende der Kommunikation gegebenenfalls Zugriffsrechte (insbesondere betreffend Statusinformationen betreffend A in einem Presence-Service-Server 9), die unter 2.) gegeben wurden.

Das Endgerät B des angerufenen Teilnehmers:
1.) bietet abhängig von vordefinierten Einstellungen dem Nutzer des Endgerätes B an, seinem Kommunikationspartner A für die Dauer des Gesprächs bestimmte Statusinformationen zur Verfügung zu stellen;
2.) ändert dann gegebenenfalls Zugriffsrechte für das Endgerät A auf Statusinformationen (Presence-Informationen) betreffend das Endgerät B (im Presence-Service-Server 9 etc.), unter Verwendung der bei der Etablierung der Kommunikation (bereits aufgebaute Verbindung) übermittelten Adresse des Endgerätes A;
3.) fragt selbst die Statusinformation (Presence-Information) betreffend das Endgerät A (beispielsweise im Presence-Service-Server 9) ab, wiederum unter Verwendung der bei der Etablierung der Kommunikation übermittelten Adresse des Endgerätes A;
4.) informiert den Teilnehmer B nach Erhalt der Statusinformation (beispielsweise eines Presence-Dokumentes) vom Endgerät oder vom Presence-Service-Server über weitere Kommunikationsmöglichkeiten mit dem Endgerät A;
5.) etabliert unter Berücksichtigung von erfassten Eingaben des Nutzers des Endgerätes B weitere Kommunikationspfade (Verbindungen) zum Endgerät A, insbesondere unter Verwendung von Adressen, die in einer Presence-Information (mit Statusinformationen) geliefert wurden.
6.) widerruft nach dem Ende einer Kommunikation gegebenenfalls die Zugriffsrechte, die unter 2.) im Presence-Service-Server 9 dem Endgerät A hinsichtlich Daten betreffend das Endgerät B gegeben wurden.

Das Kommunikationsnetz kann einen Presence-Service-Server zur Verfügung (zum Beispiel gemäß 3GPP-Spezifikationen TS22.141/TS23.141/TS24.141) stellen. Vorzugsweise kann der Presence-Service die zur Etablierung der Kommunikation (der ersten Verbindung) verwendeten Adressen auch verwenden, um weitere Verbindungen /Kommunikationspfade aufzubauen, wie das zum Beispiel bei 3GPP-Presence-Diensten möglich ist, oder auch wenn Kommunikations- und Presence-Dienst beide SIPbasiert sind (IETF/RFC 3261/IETF simple WG).

Presence-Information (Statusinformation) wird also während einer etablierten Kommunikation (einer aufgebauten Verbindung wie einer Sprachverbindung), also zum Beispiel während eines Telefonats, den Nutzern A, B zur Verfügung gestellt, ohne dass der Gesprächspartner (B/A) vorher in einer "Buddy-Liste" eingetragen sein muss oder dauerhaft Zugriff erhalten muss. Hierdurch wird die ergänzende Verwendung von Multimedia-Anwendungen zusätzlich zu einer bereits aufgebauten Sprachtelefonverbindung erleichtert. Das Problem der Adressierung und die Erfassung der Kommunikationsmöglichkeiten, die die jeweils andere Seite unterstützt, werden beispielsweise mit Unterstützung von Presence-Mechanismen gelöst.

Vorteilhaft ist es insbesondere, wenn die Nutzerrechte (des jeweils anderen Endgeräts) automatisch oder halbautomatisch geändert werden (siehe insbesondere obige Schritte 2 bis 6 jeweils zum Endgerät A und zum Endgerät B), so dass ein Presence-Dienst auch für eine Kommunikation mit Gesprächspartnern zur Verfügung steht, mit denen nicht regelmäßig kommuniziert wird, zu denen also keine Statusinformationen im jeweils anderen Endgerät bekannt sind.

Erfindungsgemäß können Zugangsdaten (Presence Daten) (neben ihren sonstigen Zwecken) für die Vorbereitung des Aufbaus oder den Aufbau einer weiteren Verbindung (Bild etc) zusätzlich zu einer aufgebauten (Sprach-) Verbindung verwendet werden und insbesondere kann eine Sprachverbindung (Gespräch) als Auslöser verwendet werden um einem Teilnehmer (Endgerät) der Sprachverbindung einen Zugriff auf "Presenceinfo" (Statusinformationen, Präsenzinformationen) des anderen Sprachverbindungsteilnehmers zu erlauben, insbesondere temporär zu erlauben.

## Patentansprüche

1. Verfahren zum Senden von mindestens ein Endgerät (A) betreffenden Statusinformationen an ein weiteres Endgerät (B) mittels eines Telekommunikationsnetzes (9; 3 - 8),
wobei nach einem Aufbau einer Verbindung (A-B) von einem Endgerät (A) zum weiteren Endgerät (B) auf Veranlassung eines der Endgeräte (A; B; A und B) Statusinformationen betreffend ein Endgerät (A; B) an das jeweils andere Endgerät (B; A) gesendet werden,
**dadurch gekennzeichnet, dass**
die Statusinformationen angeben, ob der Aufbau eines weiteren Kommunikationspfads zwischen einem Endgerät (A; B) zu dem jeweils anderen Endgerät (B; A) zusätzlich zu der bereits aufgebauten Verbindung möglich ist.

2. Verfahren nach Anspruch 1,
**dadurch gekennzeichnet,**
**dass** die bereits aufgebaute Verbindung eine Sprachverbindung der Endgeräte (A, B) ist.

3. Verfahren nach einem der vorhergehenden Ansprüche,
**dadurch gekennzeichnet,**
**dass** das Senden von Statusinformationen betreffend ein Endgerät an das jeweils andere Endgerät von einem Endgerät (A) oder von beiden Endgeräten veranlasst wird.

4. Verfahren nach einem der vorhergehenden Ansprüche,
**dadurch gekennzeichnet,**
**dass** ein Endgerät (A) an das jeweils andere Endgerät (B) Statusinformationen sendet.

5. Verfahren nach einem der vorhergehenden Ansprüche,
**dadurch gekennzeichnet,**
**dass** eine Einrichtung (9) eines Telekommunikationsnetzes, über das die aufgebaute Verbindung verläuft, Statusinformationen betreffend ein Endgerät an das jeweils andere Endgerät sendet.

6. Verfahren nach einem der vorhergehenden Ansprüche,
**dadurch gekennzeichnet,**
**dass** Statusinformationen Eigenschaften und/oder mindestens einen Status eines Endgeräts (A, B) betreffen.

7. Verfahren nach Anspruch 6,
**dadurch gekennzeichnet,**
**dass** Statusinformationen von einem Endgerät unterstützte Kommunikationsformen und/oder dort voreingestellte Kommunikationsformen betreffen.

8. Verfahren nach Anspruch 7,
**dadurch gekennzeichnet,**
**dass** Statusinformationen betreffend Kommunikationsformen angeben, ob ein Endgerät eine bestimmte Art der Kommunikation, insbesondere eine Bild-Kommunikation unterstützt und/oder ob die Art der Kommunikation dort als bevorzugt eingestellt ist.

9. Verfahren nach einem der vorhergehenden Ansprüche,
**dadurch gekennzeichnet,**
**dass** Statusinformationen betreffend mögliche und/oder bevorzugte Kommunikationsformen angeben, ob in einem Endgerät eine Kommunikation durch alphanumerische Textnachrichten unterstützt wird.

10. Verfahren nach einem der vorhergehenden Ansprüche,
**dadurch gekennzeichnet,**
**dass** ein Endgerät (A) dem weiteren Endgerät (B) nur nach Feststellung einer Bestätigungseingabe seines Nutzers das Übersenden von Statusinformationen an das weitere Endgerät (B) anbietet.

11. Verfahren nach einem der vorhergehenden Ansprüche,
**dadurch gekennzeichnet,**
**dass** ein Endgerät (A) dem weiteren Endgerät (B) den Zugriff auf Statusinformationen, insbesondere Presence-Informationen, in einem Server (9) eines Mobilfunknetzes durch eine Nachricht an diesen Server (9) ermöglicht, insbesondere nur für die Dauer der bereits aufgebauten Verbindung ermöglicht.

12. Verfahren nach einem der vorhergehenden Ansprüche,
**dadurch gekennzeichnet,**
**dass** ein Endgerät (A) dem weiteren Endgerät (B) nur Statusinformationen sendet, falls das weitere Endgerät (B) dieses befürwortet.

13. Verfahren nach einem der vorhergehenden Ansprüche, **dadurch gekennzeichnet, dass** der weitere Kommunikationspfad eine Bildverbindung ist.

14. Verfahren nach einem der vorhergehenden Ansprüche,
**dadurch gekennzeichnet,**
**dass** jeweils ein Endgerät (B) von einem Server (9) eines Mobilfunknetzes Statusinformationen betreffend das jeweils andere Endgerät (A), zu dem bereits die Verbindung aufgebaut ist, abfragt und die Statusinformationen erhält, falls der Server eine hierzu Nutzerrechte einräumende Nachricht vom anderen Endgerät (A) erhalten hat.

15. Verfahren nach einem der vorhergehen Ansprüche,
**dadurch gekennzeichnet,**
**dass** das Telekommunikationsnetz ein Mobilfunknetz ist und eines der Endgeräte oder beide Endgeräte Mobilfunkendgeräte sind.

16. Verfahren nach Anspruch 15,
**dadurch gekennzeichnet,**
**dass** das Telekommunikationsnetz ein zellulares Mobilfunknetz ist und dass die Endgeräte Endgeräte für ein zellulares Mobilfunknetz sind.

17. Endgerät mit Mitteln zur Durchführung des Verfahrens nach einem der vorhergehenden Ansprüche.

18. Endgerät (A) nach Anspruch 17,
- mit einer Einrichtung zum Aufbau einer Verbindung,
- mit einer Sende-Einrichtung zum Senden einer Nachricht an einen Server (9) eines Telekommunikationsnetzes, der diesem die Übermittlung von Statusinformationen betreffend das Endgerät (A) an ein weiteres Endgerät (B) erlaubt,
- mit einer Steuereinrichtung zum Veranlassen der Sendeeinrichtung zum Senden der Nachricht, sobald eine Verbindung vom Endgerät (A) zu einem weiteren Endgerät (B) aufgebaut ist.

## Claims

1. Method for sending status information relating to at least one terminal (A) to a further terminal (B) by means of a telecommunications network (9; 3 - 8),
with, after a connection (A-B) has been established from a terminal (A) to the further terminal (B), at the instigation of one of the terminals (A; B; A and B) status information relating to a terminal (A; B) being sent to the other terminal (B; A) in each case,
**characterised in that**,
the status information specifies whether it is possible to establish a further communication path between a terminal (A; B) to the other terminal (B; A) respectively in addition to the connection already set up.

2. Method according to claim 1,
**characterised in that**
the connection already set up is a voice connection of the terminals (A, B).

3. Method according to one of the previous claims.
**characterised in that**
the sending of status information relating to a terminal to the other terminal in each case is instigated by one terminal (A) or by both terminals.

4. Method according to one of the previous claims.
**characterised in that**
a terminal (A) sends status information to the other terminal (B) in each case.

5. Method according to one of the previous claims.
**characterised in that**
a device of a telecommunications network over which the established connection runs sends status information relating to a terminal to the other terminal in each case.

6. Method according to one of the previous claims.
**characterised in that**
the status information relates to characteristics and/or to at least one status of a terminal (A, B).

7. Method according to claim 6,
**characterised in that**
status information relates to forms of communication supported by a terminal and/or forms of communication predetermined for the terminal.

8. Method according to claim 7,
**characterised in that**
status information relating to forms of communication specifies whether a terminal supports a specific type of communication, especially picture communication and/or whether the type of communication is set as the preferred form there.

9. Method according to one of the previous claims.
**characterised in that**
status information relating to possible and/or preferred forms of communication specifies whether communication by alphanumeric text messages is supported in a terminal.

10. Method according to one of the previous claims.
**characterised in that**
a terminal (A) only offers to the further terminal (B) the facility to pass on status information to the further terminal (B) after establishing a confirmation entry by its user.

11. Method according to one of the previous claims.
**characterised in that**
a terminal (A) makes it possible for the further terminal (B) to access status information, especially presence information, in a server (9) of a mobile radio network by a message to this server (9), especially only for the duration of the connection already set up.

12. Method according to one of the previous claims.
**characterised in that**
a terminal (A) only sends to the further terminal (B) status information if the further terminal (B) approves this.

13. Method according to one of the previous claims.
**characterised in that**
the further communication path is a picture connection.

14. Method according to one of the previous claims.
**characterised in that**
a terminal (B) of a server (9) of a mobile radio network interrogates status information relating to the other respective terminal (A) to which the connection has already been set up and receives the status information if the server has received a message granting user rights to it from the other terminal (A).

15. Method according to one of the previous claims
**characterised in that**
the telecommunications network is a mobile radio network and one of the terminals or both terminals are mobile radio terminals.

16. Method according to claim 15,
**characterised in that**
the telecommunications network is a cellular mobile radio network and that the terminals are terminals for a cellular mobile radio network.

17. Terminal with means for executing method according to one of the previous claims.

18. Terminal (A) according to claim 17,
- with a device for setting up a connection,
- with a send device for sending a message to a server (9) of a telecommunications network which allows this device to transfer status information relating to the terminal (A) to a further terminal (B),
- with a control device for causing the send device to send the message as soon as a connection is established from terminal (A) to a further terminal (B).

## Revendications

1. Procédé pour l'émission d'informations d'état concernant au moins un terminal (A) à un autre terminal (B) par un réseau de télécommunications (9 ; 3 - 8), des informations d'état concernant un terminal (A ; B) étant envoyées respectivement à l'autre terminal (B ; A) après l'établissement d'une communication (A-B) d'un terminal (A) avec un autre terminal (B) sur l'ordre de l'un des terminaux (A ; B ; A et B), **caractérisé en ce que** les informations d'état indiquent si l'établissement d'une voie de communication supplémentaire entre un terminal (A ; B) est possible avec respectivement l'autre terminal (B ; A) en plus de la liaison déjà établie.

2. Procédé selon la revendication 1, **caractérisé en ce que** la communication déjà établie est une liaison vocale des terminaux (A, B).

3. Procédé selon l'une des revendications précédentes, **caractérisé en ce que** l'émission d'informations d'état concernant un terminal à respectivement l'autre terminal est déclenchée par un terminal (A) ou par les deux terminaux.

4. Procédé selon l'une des revendications précédentes, **caractérisé en ce qu'**un terminal (A) envoie des informations d'état à respectivement l'autre terminal (B).

5. Procédé selon l'une des revendications précédentes, **caractérisé en ce qu'**un dispositif (9) d'un réseau de télécommunications, par lequel passe la communication établie, envoie des informations d'état concernant un terminal à respectivement l'autre terminal.

6. Procédé selon l'une des revendications précédentes, **caractérisé en ce que** des informations d'état concernent des propriétés et/ou au moins un état d'un terminal (A, B).

7. Procédé selon la revendication 6, **caractérisé en ce que** des informations d'état concernent des formes de communication supportées par un terminal et/ou des formes de communication préréglées dans celui-ci.

8. Procédé selon la revendication 7, **caractérisé en ce que** des informations d'état concernant des formes de communication indiquent si un terminal supporte un type particulier de communication, en particulier une vidéocommunication et/ou si le type de communication y est réglé comme mode préférentiel.

9. Procédé selon l'une des revendications précédentes, **caractérisé en ce que** des informations d'état concernant des formes de communication possibles et/ou préférées indiquent si une communication est supportée par des messages textuels alphanumériques dans un terminal.

10. Procédé selon l'une des revendications précédentes, **caractérisé en ce qu'**un terminal (A) ne propose à l'autre terminal (B) d'envoyer des informations d'état à l'autre terminal (B) qu'après constatation de l'entrée d'une validation par son utilisateur.

11. Procédé selon l'une des revendications précédentes, **caractérisé en ce qu'**un terminal (A) permet à l'autre terminal (B) d'accéder à des informations d'état, et notamment à des informations de présence dans un serveur (9) d'un réseau de téléphonie mobile par un message adressé à ce serveur (9), et ce notamment uniquement pour la durée de la communication déjà établie.

12. Procédé selon l'une des revendications précédentes, **caractérisé en ce qu'**un terminal (A) n'envoie des informations d'état à un autre terminal (B) que si l'autre terminal (B) donne son accord.

13. Procédé selon l'une des revendications précédentes, **caractérisé en ce que** la voie de communication supplémentaire est une vidéocommunication.

14. Procédé selon l'une des revendications précédentes, **caractérisé en ce qu'**un serveur (9) d'un réseau de téléphonie mobile demande à respectivement un terminal (B) des informations d'état concernant respectivement l'autre terminal (A), avec lequel une communication a déjà été établie, et **en ce que** ce terminal (B) reçoit les informations d'état, si le serveur a reçu un message aménageant des droits d'utilisation à cet effet de la part de l'autre terminal (A).

15. Procédé selon l'une des revendications précédentes, **caractérisé en ce que** le réseau de télécommunications est un réseau de téléphonie mobile et l'un des terminaux ou les deux sont des appareils de téléphonie mobile.

16. Procédé selon la revendication 15, **caractérisé en ce que** le réseau de télécommunications est un réseau de téléphonie mobile cellulaire, et **en ce que** les terminaux sont des terminaux pour un réseau de téléphonie mobile cellulaire.

17. Terminal comportant des moyens d'exécution du procédé selon l'une des revendications précédentes.

18. Terminal (A) selon la revendication 17,
- comportant un dispositif pour l'établissement d'une communication,
- comportant un dispositif d'émission pour l'émission de messages à un serveur (9) d'un réseau de télécommunications, qui permet à celui-ci de transmettre des informations d'état concernant le terminal (A) à un autre terminal (B),
- comportant un dispositif de commande pour ordonner au dispositif émetteur d'émettre le message dès qu'une communication est établie entre le terminal (A) et un autre terminal (B).
